Europäisches Patentamt

European Patent Office

Office européen des brevets

(19)

(11) Publication number: **0 044 590**
**B1**

# EUROPEAN PATENT SPECIFICATION

(12)

(45) Date of publication of patent specification: **07.11.84**

(51) Int. Cl.³: **A 23 G 3/02, A 23 G 3/12**

(21) Application number: **81200778.9**

(22) Date of filing: **07.07.81**

(54) **Apparatus for producing sweets.**

(30) Priority: **18.07.80 NL 8004145**

(43) Date of publication of application:
**27.01.82 Bulletin 82/04**

(45) Publication of the grant of the patent:
**07.11.84 Bulletin 84/45**

(84) Designated Contracting States:
**CH DE FR GB LI NL**

(56) References cited:
**BE-A- 881 989**
**DE-C- 505 785**
**NL-C- 83 594**
**US-A-1 717 507**
**US-A-3 541 973**

(73) Proprietor: **Derckx, Henricus Antonius Jacobus Maria**
**De Fuus 8**
**NL-6000 AG Weert (NL)**

(72) Inventor: **Derckx, Henricus Antonius Jacobus Maria**
**De Fuus 8**
**NL-6000 AG Weert (NL)**

(74) Representative: **Kooy, Leendert Willem et al**
**OCTROOIBUREAU VRIESENDORP & GAADE**
**P.O. Box 266**
**NL-2501 AW The Hague (NL)**

Courier Press, Leamington Spa, England.

## Description

The invention relates to an apparatus for forming sweets out of a sugar strand, on which sweets one can whistle, substantially comprising a rotatable drum with around its periphery a series of recesses which delimit, together with a series of axially slidable mould punches and with flaps hingedly attached to the drum periphery, mould cavities for the sweets.

An apparatus having the above features is known from the Dutch Patent 91 633 but this known apparatus is not suited to produce so-called whistle lollies. The invention provides an apparatus with which it is possible to produce such whistle lollies in a very efficient way.

According to the invention this is achieved by providing the recesses with an edge and the mould punch with a specially shaped point which cooperates with the edge during the press movement, and by providing a mouth piece member which is operative after the flaps have been opened.

The mouth piece shaping member preferably is a roller with an engraved periphery surface. In order to prevent that the sugar mass being pressed away, a flange can be provided on the periphery surface of the roller.

If the sweets are to be provided with a stick in order to form a so-called whistle lolly, then a stick supplying member must be provided for in the apparatus.

The invention will be further elucidated hereunder by means of the drawings, showing therein an embodiment of the apparatus according to the invention. The drawings show:

Fig. 1 a vertical cross-section over a mould cavity with closed flaps,

Fig. 2 a schematical side view of the rotatable drum,

Fig. 3 the same as in Fig. 1 after that the mould punch has totally moved forward into the mould cavity, that is, in the position B of Fig. 2,

Fig. 4 the same as in Fig. 1 after the mould punch has partially moved back and the sweet is positioned under the mouth piece shaping member, that is, in the position D of Fig. 2, and

Fig. 5 the same as in Fig. 1 at the moment when the whistle lolly can be transported out of the apparatus, that is, in position E of Fig. 2.

The apparatus comprises a rotating drum 1 which at its periphery is provided with recesses 2 and with flaps 3 rotatably connected to the drum, which are also provided with cavities which together with the recesses in the drum periphery form the profile of the lollies. Punches 4 are provided parallel to the axis of rotation of the drum, one punch for every mould cavity in the drum, said punches being axially reciprocatable in the mould cavity.

Each mould punch is provided at its end lying in the mould cavity, with a specially shaped point 5. The recess 2 in this case is hemispherical. It can however have any desired other shape. The mould cavity 2 is, at its end facing the mould punch 4, provided with a part spherical inner surface 6, while the two flaps 3, which cooperate with the mould cavity, together form a quarter of a spherical inner surface 7 with their ends facing away from their hinging points, said quarter of a spherical inner surface joining the quarter of the spherical surface 6 when the flaps are closed, this in such a way that the surfaces 6 and 7 delimit a hemispherical space. The surfaces 6 and 7 can also be embodied in another profile, so that the space is not a hemisphere.

In the closed position of the flaps, two adjoining flaps and the edge of the mould cavity 2 leave clear a small opening 8, which serves as transport opening for axially inserting a lolly stick 9 into the sugar mass 10 in the mould cavity. The size of the opening 8 is precisely adapted to the diameter of the stick, so that hwen the stick is being inserted through the opening, no sugar can be pressed out along the stick. In order to prevent pressing out the sugar, it is necessary that the stick has been inserted through the opening, before the effective press operation of the mould punch 4 starts.

In the embodiment example the stick 9 as well as the opening 8 can have a circular section. Half the opening is at the upper edge of the surface 6, recessed in the longitudinal axis of the mould cavity, while a quarter of the opening is recessed at the corners of each of the flaps cooperating with the mould cavity.

The sticks are supplied from the store barrel 18 and partially inserted in the mould cavity.

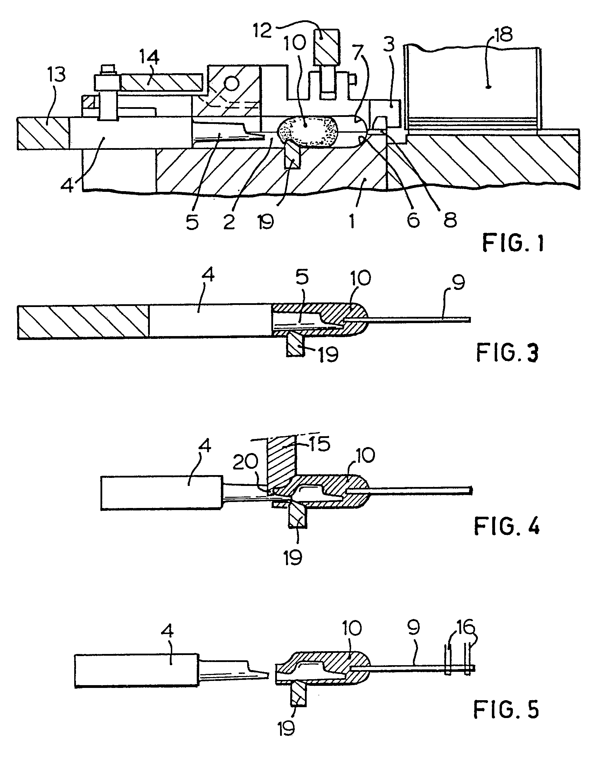

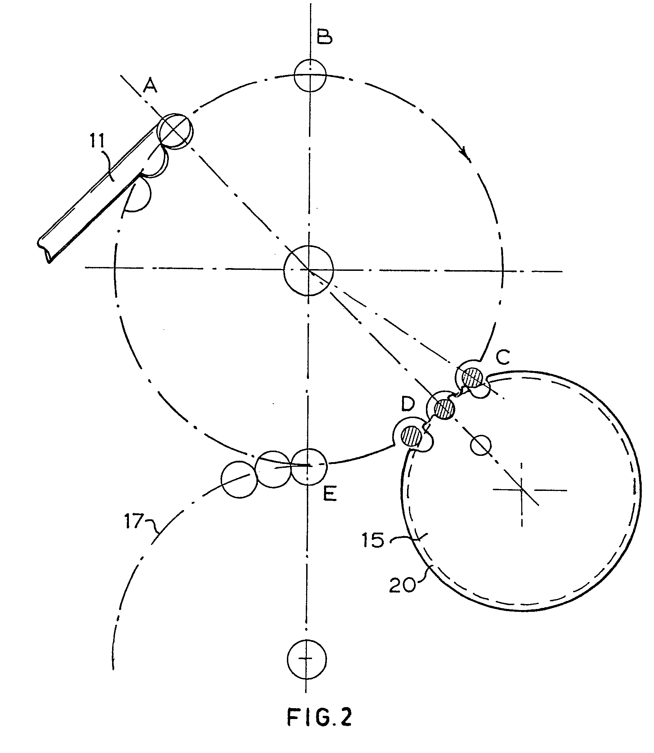

The situation of Fig. 1 is shown in Fig. 2 with A. There the sugar mass 10 is cut off from the sugar strand 11 by closing the flaps under the influence of a cam 12 (Fig. 1).

The position B of Fig. 2 corresponds to that which is shown in Fig. 3, from which it appears that the sugar mass 10 is not only brought into contact with the stick 9 but also cooperates with an edge 19 provided in the recess 2, so that a sharp angled opening appears when the specially shaped point 5 of the mould punch 4 has been withdrawn from the sugar mass in Fig. 3.

The cross-section shape of the whistle lolly is, in principal, arbitrary. It can have a cylindrical cross-section and in that case the edge has been embodied in a circular section shape. When it concerns a guard whistle with a more rectangular section, then the edge can be substantially straight.

The reciprocating action of the mould punch is obtained in Fig. 1 with the aid of the cams 13 and 14.

In position C of Fig. 2 the mould punch is in the position of Fig. 1 and the flap 3 can open so that the sugar mass can, in position D, be provided with a mouth piece by passing it under a roller 15 with an engraved periphery surface.

Said roller 15, which is to provide the mouth piece, is so driven that it has the same periphery speed as the almost finished lolly.

In order to prevent the sugar mass from being pushed away, a flange 20 can be provided on the periphery surface of the roller.

The mould punch now goes further back and will come into position E of Fig. 2, in which position the lolly can be transported out of the apparatus to a cooling-installation not shown, to be cooled further.

In order to do so the stick can be gripped between fingers 16 which move according to the path 17 of Fig. 2.

The stick barrel 18 of Fig. 1 could also be omitted or left empty when whistles without sticks are produced, but the opening 8 then has to be closed.

## Claims

1. Apparatus for forming sweets out of a sugar strand, on which sweets one can whistle, substantially comprising a rotatable drum with around its periphery a series of recesses which delimit, together with a series of axially slidable mould punches and with flaps hingedly attached to the barrel periphery, mould cavities for the sweets, characterized in that the said recesses are provided with an edge (19) and in that the mould punch (4) has a specially shaped point (5) which cooperates with the edge (19) during the press movement, while a mouth piece shape member is provided which is operative after the flaps (3) have been opened.

2. Apparatus according to claim 1, characterized in that the mouth piece shape member is a roller (15) with engraved periphery surface.

3. Apparatus according to claim 1 or 2, characterized in that the roller (15) has a flange (20).

4. Apparatus according to one of the claims 1—3, characterized in that a stick transporting member is provided so that so-called whistle lollies can be produced.

## Patentansprüche

1. Vorrichtung zum aus einer Zuckersträhne, bilden von Süssigheiten auf denen man pfeifen kann, im Wesentlichen bestehend aus einer drehbaren Trommel mit um die Aussenumfang herum eine Reihe von Aussparungen die zusammen mit einer Reihe von darin axial verschiebbaren Formstempel und gelenklich an der Trommelaussenumfang angeordneten Klappen Formhöhlungen für die süssigheiten begrenzen, dadurch gekennzeichnet, dass die Aussparungen mit einen Rand (19) versehen sind, und dass der Formstempel (4) ein speziell geformter Spitze (5) aufweist der während der Press bewegung mit dem Rand (19) zusammenarbeitet, während ein Mundstückformorgan angeordnet ist das betrieben wird nachdem die Klappen (3) geöffnet worden sind.

2. Vorrichtung nach Anspruch 1, dadurch gekennzeichnet, dass das Mundstückformorgan eine Rolle (15) mit einer gravierten Aussenumfang ist.

3. Vorrichtung nach Anspruch 1 oder 2, dadurch gekennzeichnet, dass die Rolle (15) einen Flansch (20) aufweist.

4. Vorrichtung nach einer der Ansprüche 1 bis 3, dadurch gekennzeichnet, dass ein Stöckelieferorgan angeordnet ist, so dass sogenannte Pfeiflutscher hergestellt werden können.

## Revendications

1. Dispositif de formation, à partir d'un brin de sucre, de sucreries susceptibles de produire un sifflement, lequel dispositif comprend essentiellement un tambour rotatif présentant sur sa périphérie une pluralité d'evidements qui délimitent, conjointement avec une séie de poinçons de moulage qui y sont axialement coulissables et avec des valves fixées par articulation à la périphérie du tambour, des alvéoles de moulage pour les sucreries, caractérisé en ce que lesdites évidements ont un rebord (19) et en ce que le poinçon de moulage (4) comporte un bout spécialement formé (5) qui coopère avec le rebord (19) pendant le mouvement de pression, alors qu'il est prévu une partie pour former une embouchure qui entre en action après que les valves (3) sont ouvertes.

2. Dispositif selon la revendication 1, caractérisé en ce que la partie pour former une embouchure est un rouleau (15) ayant une surface circonférentielle gravée.

3. Dispositif selon la revendication 1 ou 2, caractérisé en ce que le rouleau (15) comporte une bride (20).

4. Dispositif selon l'une quelconque des revendications 1—3, caractérisé en ce qu'il est prévu un transporteur de bâtonnets afin de permettre de produire des sucettes dites de sifflement.

0 044 590

FIG. 1

FIG. 3

FIG. 4

FIG. 5

1

FIG.2